# EUROPÄISCHE PATENTSCHRIFT

(11) **EP 1 128 677 B1**
(45) Veröffentlichungstag und Bekanntmachung des Hinweises auf die Patenterteilung: **12.12.2007**
(21) Anmeldenummer: 00103727.4
(22) Anmeldetag: 22.02.2000
(51) Int. Cl.: H04N 7/26, H04N 5/235

(54) **Verfahren zum Betrieb einer Bildaufnahmeeinrichtung und Anordnung zur Durchführung des Verfahrens**
Method for operating an image pickup device, and arrangement for implementing the method
Procédé de conduite d'un dispositif de prise d'images, et système pour la mise en oeuvre d'un tel procédé

(43) Veröffentlichungstag der Anmeldung: 29.08.2001
(73) Patentinhaber: SIEMENS AKTIENGESELLSCHAFT, 80333 München (DE)
(72) Erfinder: Seytter, Fritz, 81669 München (DE)
(74) Vertreter: Samson & Partner

(56) Entgegenhaltungen:
- EP-A- 0 557 007
- EP-A- 0 762 774
- WO-A-97/04597
- DE-A- 19 713 199
- US-A- 5 430 480
- PATENT ABSTRACTS OF JAPAN vol. 1998, no. 09, 31. Juli 1998 (1998-07-31) & JP 10 108063 A (SONY CORP), 24. April 1998 (1998-04-24)

## Beschreibung

Die Erfindung betrifft ein Verfahren zum Betrieb einer Bildaufnahmeeinrichtung nach dem Oberbegriff des Anspruchs 1 sowie eine Anordnung zur Durchführung dieses Verfahrens.

Im Zuge der rasanten Fortschritte der Telekommunikation gewinnt auch die Übertragung von Bewegtbildern im Rahmen eines Telefongespräches und die Durchführung von Telefonkonferenzen inzwischen an Bedeutung. Diese Möglichkeiten sind bisher in der Praxis Festnetz-Anlagen vorbehalten, in nächster Zukunft wird aber auch die Aufnahme und Übertragung von Bildern der Gesprächsteilnehmer bei Mobilfunkverbindungen möglich sein.

Die Qualität der Videoübertragung bei einer solchen - verkürzt auch als "Videokommunikation" bezeichneten - Telekommunikation ist dann am besten, wenn sich der Bildinhalt wenig ändert. Bei Änderungen des Bildes müssen an der Videokamera Helligkeit und Weißabgleich nachgesteuert bzw. "geregelt" werden, um ein qualitativ gutes Bild zu erhalten. EP 0557007 beschreibt eine Vorrichtung, die eine automatische Steuerung der Bildhelligkeit und/oder Bildschärfe der Iris einer Videokamera ermöglicht. Unnötige Helligkeitsänderungen bzw. Weißabgleichvorgänge führen aber ebenfalls zu Irritationen beim Verbindungspartner.

Der Erfindung liegt daher die Aufgabe zugrunde, ein verbessertes Verfahren zum Betrieb einer Bildaufnahmeeinrichtung, insbesondere Videokamera, in einer Bildübertragungs- bzw. Bildspeicheranordnung anzugeben, welches vom Betrachter als angenehm empfundene Bilder liefert. Weiterhin zielt die Erfindung auf die Bereitstellung einer geeigneten Anordnung zur Durchführung dieses Verfahrens.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Anordnung mit den Merkmalen des Anspruchs 10.

Die Erfindung schließt den wesentlichen Gedanken ein, den bei einer Bildübertragungs- und/oder Bildspeicheranordnung regelmäßig vorhandenen Kodierer (Bildverschlüsselungseinrichtung), der in der Regel zum Zwecke der Datenkompression eine Verarbeitung der Bilddaten ausführt, zu einem Steuereingriff in die Bildaufnahmeeinrichtung zu nutzen. Sie schließt weiter den Gedanken ein, daß dieser Steuereingriff in der Aktivierung oder Deaktivierung bzw. Ansteuerung oder Nichtansteuerung eines internen Steuer- bzw. Regelmechanismus für bestimmte Bildparameter (insbesondere Helligkeit und Weißabgleich) besteht. Die Aktivierung bzw. Deaktivierung der kameraeigenen Steuermittel erfolgt also in Abhängigkeit vom Ergebnis der Verarbeitung vorher aufgenommener Bilder.

Bei einer Anordnung zur Durchführung dieses Verfahrens weist also die Bildaufnahmeeinrichtung einen Steuersignaleingang für ein entsprechendes externes Ansteuersignal auf, welches der internen Steuer- bzw. Regeleinrichtung zugeführt wird. Der Kodierer - insbesondere ein sogenannter Video-Encoderweist einen Datensignalausgang auf und ist über diesen mit einer Ansteuereinrichtung verbunden, welche ihrerseits mit dem Steuersignaleingang der Kamera verbunden ist und welche die durch die Bilddatenkomprimierungseinrichtung gelieferten Bilddaten verarbeitet und das die kamerainterne Aufnahmesteuereinrichtung wahlweise aktivierenden oder deaktivierenden Ansteuersignal hieraus erzeugt.

In einer bevorzugten Ausführung der Erfindung werden Informationen über Bewegungen in der "Szene", also dem vom der Kamera aufgenommenen Bildausschnitt, verarbeitet, die ansonsten insbesondere für eine Bilddatenkompression genutzt werden.

Erfindungswesentlich umfaßt die Verarbeitung der aufgenommenen Bilder eine Diskriminierung zwischen lokalen und globalen Bewegungen innerhalb einer Bildfolge. Nur bei Erkennung einer globalen Bewegung wird die Kamera zur Ausführung interner Steuer- bzw. Regelvorgänge hinsichtlich der Bildaufnahme angesteuert, während eine unbewegte Szene oder das Vorliegen lediglich lokaler Bewegungen eine Deaktivierung der kamerainternen Steuerung bewirken.

Zur Unterscheidung globaler von lokalen Bewegungen werden für die Verarbeitung der aufgenommenen Bilder Bild-Teilbereiche vorbestimmt und für diese jeweils lokale Bewegungsvektoren berechnet, und es wird dann eine globale Bewegung als vorliegend angesehen, wenn mindestens in einer vorbestimmten Mehrzahl von Bild-Teilbereichen (einem vorbestimmten Bildteil) die lokalen Bewegungsvektoren wesentlich von Null verschieden sind. Sie können hierbei insbesondere im wesentlichen übereinstimmen - was bei einem Kameraschwenk gegenüber dem aufgenommenen Objekt der Fall sein wird - oder auch unterschiedlich gerichtet sein - was bei einem Annähern der Kamera an das Objekt oder einem Entfernen von diesem der Fall sein wird.

Der erwähnte Bildteil umgreift zweckmäßigerweise das Bildzentrum mindestens teilweise, also etwa in Gestalt eines sich längs zweier Bildkanten erstreckenden rechten Winkels, eines sich längs dreier Bildkanten erstreckenden "U", eines geschlossenen Rahmens oder auch eines Halb-, Dreiviertel- oder Vollkreises um den Bildmittelpunkt.

Es ist darauf hinzuweisen, daß die Aufteilung eines Bildes in Bild-Teilbereiche und die Berechnung lokaler Bewegungsvektoren für diese Bild-Teilbereiche bereits bei bekannten Bilddatenkompressionsverfahren erfolgt und insoweit für die Zwecke der vorliegenden Erfindung auf die Ergebnisse eines in der entsprechenden Anordnung implementierten Kompressionsverfahrens zurückgegriffen werden kann. Gegenüber einer solchen Anordnung benötigt die vorgeschlagene Anordnung in der hier in Rede stehenden Ausführung dann Auswahlmittel zur Festlegung des erwähnten Bildteiles durch Auswahl einer geordneten Mehrzahl von im Kodierer bereits vorbestimmten Bild-Teilbereichen und zusätzliche Vergleichermittel zum Vergleich der einzelnen Bewegungsvektoren in verschiedenen Bild-Teilbereichen des vorbestimmten Bildteiles mit einem vorbestimmten Vergleichswert und/oder miteinander.

Die soeben skizzierte Ausführung geht davon aus, daß eine lokale Bewegung sich im Inneren des Bildes abspielt, eine globale Bewegung sich aber im wesentlichen auf den gesamten Bildrand in gleicher Weise auswirkt. Daher ergibt sich die Überlegung, daß bei Feststellung einer "einheitlichen" Bewegung eines festgelegten Bildteils um das Bildzentrum herum - der vereinfacht als "Rahmen" bezeichnet werden kann -, eine globale Bewegung vorliegt. Wenn nun nur diese globalen Bewegungen zur Freigabe der kamerainternen Steuerung von Aufnahmeparametern herangezogen werden, wird eine unerwünschte und den Betrachter des Bildes irritierende Reaktion der Kamerasteuerung auf lediglich lokale Bewegungen (die keine Nachregelung der Bildhelligkeit oder einen erneuten Weißabgleich erfordern) vermieden.

In einer weiteren Ausführung werden bei der Verarbeitung aufgenommener Bilder, insbesondere im Rahmen eines in der Gesamtanordnung ohnehin implementierten Verfahrens zur Bildstabilisierung, Bewegungsbeträge (etwa in Bildausschnitten) ermittelt und ausgewertet. Hierbei kommt insbesondere eine Schwellwertverarbeitung in Frage: Solange ein Bildausschnitt durch die Bildstabilisierung "gefangen" ist, wird die interne Regelung der Kamera festgehalten. Sofern die Bildstabilisierung dem Bildausschnitt aber infolge eines zu großen Bewegungsbetrages "verliert", wird die kamerainterne Regelung aktiviert bzw. freigegeben. Bei dieser Ausführung ist die Ansteuereinrichtung der vorgeschlagenen Anordnung insbesondere mit einem Datenausgang einer ohnehin vorgesehenen Bildstabilisierungseinrichtung verbunden und übernimmt von dort Daten hinsichtlich des erfaßten Bewegungsbetrages.

In einer weiteren zweckmäßigen Ausführung der Erfindung wird über die Ansteuerung oder Nichtansteuerung der internen Regelung der Kamera in Abhängigkeit von der Größe von Datenmengen entschieden, die bei der Bilddatenkodierung entstehen. Auch hier ist eine Schwellwertdiskriminierung sinnvoll. Besonders zweckmäßig ist eine auf den ausgewählten Bildteil ("Rahmen") beschränkte Auswertung der angefallenen Datenmenge, da diese wiederum am ehesten eine globale Bewegung repräsentiert.

Bei einer an diese Ausführungsform angepaßten Anordnung umfaßt die Ansteuereinrichtung Datenmengen-Auswertungsmittel zur Auswertung einer bei der Bilddatenkodierung anfallenden Datenmenge, die insbesondere Schwellwertdiskriminatormittel zum Vergleich mit einem vorbestimmten Schwellwert umfassen. Diese Auswertungsmittel sind speziell mit den Auswahlmitteln zur Festlegung des erwähnten Bildteiles verbunden, so daß die Auswertung der Datenmenge nur für den vorbestimmten Bildteil erfolgt.

Besonders vorteilhaft ist ein Einsatz des vorgeschlagenen Verfahrens und der Anordnung zu dessen Durchführung bei einem Mobilfunk-Endgerät, speziell Mobiltelefon, mit eingebauter oder angefügter Videokamera.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1 eine schematische Darstellung zur Erläuterung einer ersten Ausführungsform des erfindungsgemäßen Verfahrens,
Fig. 2 eine schematische Darstellung zur Erläuterung einer zweiten Ausführungsform des erfindungsgemäßen Verfahrens,
Fig. 3 ein Funktions-Blockschaltbild einer Anordnung zur Ausführung des in Fig. 1 illustrierten Verfahrens und
Fig. 4 ein Funktions-Blockschaltbild einer Anordnung zur Ausführung eines weiteren zweckmäßigen Verfahrens.

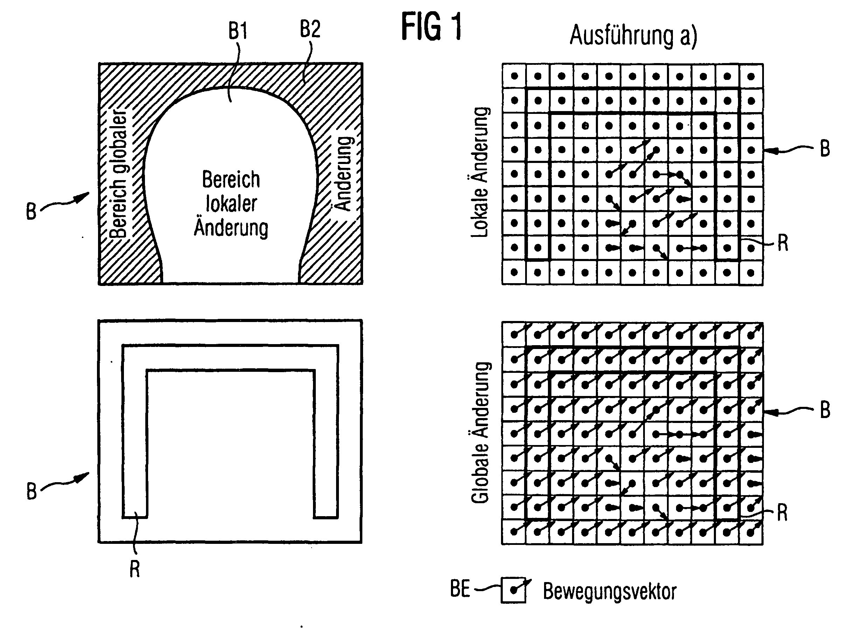

In Fig. 1 ist links oben in schematischer Darstellung in einem rechteckigen Bildfeld B einer Videokamera ein zentraler Bereich Bl, in dem lokale Änderungen auftreten können, von einem Randbereich B2 abgegrenzt. In diesem auftretende Änderungen bzw. Bewegungen sind tendenziell als globale Bewegungen zu beurteilen (insbesondere, wenn sie annähernd denselben Betrag haben und noch gleichgerichtet sind - was aber keine notwendige Bedingung für eine globale Änderung ist).

Im linken unteren Teilbild von Fig. 1 ist schematisch die Festlegung eines Bildteils ("Rahmens") innerhalb des Bildfeldes B gezeigt, der zur Erkennung globaler Änderungen bzw. Bewegungen unter Rückgriff auf Ergebnisse eines Kompressionsverfahrens dient, welches bei der Kodierung von Videobildern für deren Übertragung eingesetzt wird.

Für ein derartiges Kompressionsverfahren wird das Bildfeld B - wie auf der rechten Seite von Fig. 1 zu erkennen ist - matrixartig in kleine Bild-Teilbereiche BE aufgeteilt, denen im Zuge einer Auswertung einer vorangehenden Bildfolge jeweils ein lokaler Bewegungsvektor zugeordnet wird. In Abhängigkeit von der Art einer vorangegangenen Bewegung läßt sich nur für relativ wenige Bild-Teilbereiche ein Bewegungsvektor definieren (wie im rechten oberen Teilbild von Fig. 1), oder es liegt praktisch für alle Bild-Teilbereiche BE ein Bewegungsvektor vor (wie im Falle des unteren rechten Teilbildes von Fig. 1). Der erstere Fall entspricht beispielsweise einer Änderung der Mimik einer sich im Bildfeld B der Videokamera befindenden Person oder einen Sprechvorgang o. ä., während der zweite Fall beispielsweise bei einem Kameraschwenk vorliegt.

Der erste Fall wird hier als "lokale Änderung" bezeichnet und der zweite Fall als "globale Änderung".

Beim vorliegenden Beispiel ist im Falle der lokalen Bewegung (rechts oben in Fig. 1) in den Bild-Teilbereichen des Rahmens R überhaupt kein Bewegungsvektor definierbar, während im zweiten Fall (rechts unten in Fig. 1) in allen Bild-Teilbereichen BE des Rahmens R der lokale Bewegungsvektor praktisch den gleichen Betrag und die gleiche Richtung hat und somit definitionsgemäß eine globale Bewegung vorliegt. Im letzteren Fall wird in Realisierung der mit der Erfindung gegebenen Verfahrensvorschrift die kamerainterne Steuerung zur Regelung von Aufnahmeparametern freigegeben bzw. aktiviert, während sie im ersten Falle einer lokalen Bewegung gesperrt bzw. deaktiviert bleibt.

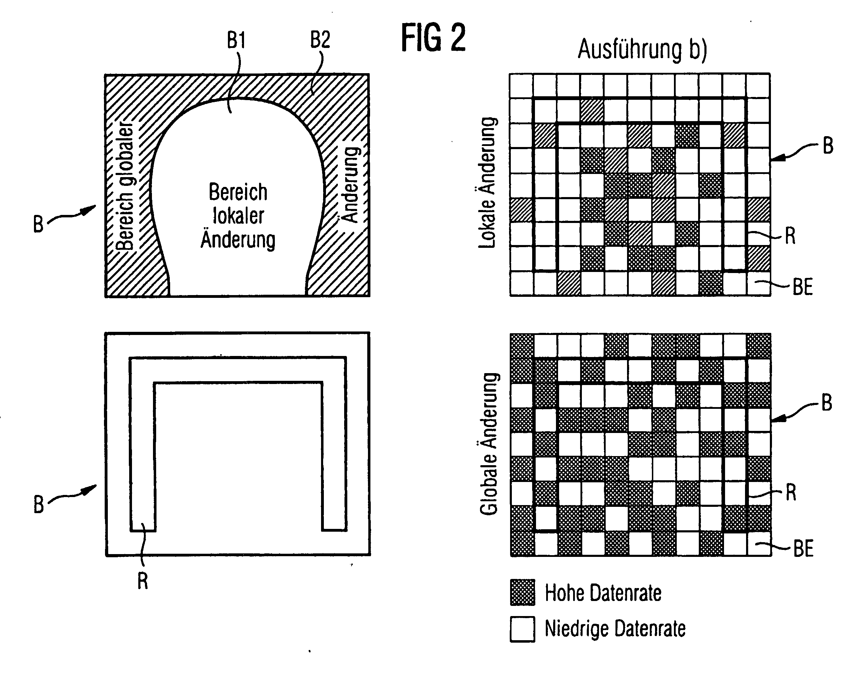

In Fig. 2 ist eine weitere Ausführungsform der Erfindung illustriert, die ebenso wie die vorgenannte erste Ausführung auf der Festlegung eines Rahmens R innerhalb des Bildfeldes B zur Unterscheidung zwischen lokalen und globalen Änderungen bzw. Bewegungen beruht. Auch bei der zweiten Ausführungsform ist das Bildfeld B in eine Vielzahl von rasterförmig angeordneten Bild-Teilbereichen BE unterteilt.

Abweichend von der ersten Ausführungsform werden hier aber nicht lokale Bewegungsvektoren in jedem Bild-Teilbereich errechnet, sondern es wird die bei der Bildkodierung anfallende Datenmenge für jeden Bild-Teilbereich protokolliert. Im rechten oberen und rechten unteren Teilbild von Fig. 2 sind die Bild-Teilbereiche entsprechend der jeweils anfallenden Datenmenge bzw. -rate schraffiert (hohe Datenrate) bzw. nicht schraffiert (niedrige Datenrate) dargestellt. Es ist zu erkennen, daß im oben rechts dargestellten Fall lokaler Änderung innerhalb des Rahmens R lediglich drei Felder mit hoher Datenrate vorliegen, während es im rechts unten dargestellten Fall globaler Änderung 10 Felder sind. Man kann also die beiden Fälle mit einer Schwellwertdiskriminierung aufgrund der auf den Rahmen R entfallenden Gesamt-Datenmenge oder der auf den Rahmen entfallenden Anzahl von Bild-Teilbereichen mit hoher Datenrate voneinander unterscheiden.

Die Auswirkung hinsichtlich der Beeinflussung der kamerainternen Aufnahmeparameter-Steuerung ist dieselbe wie bei der ersten Ausführungsform.

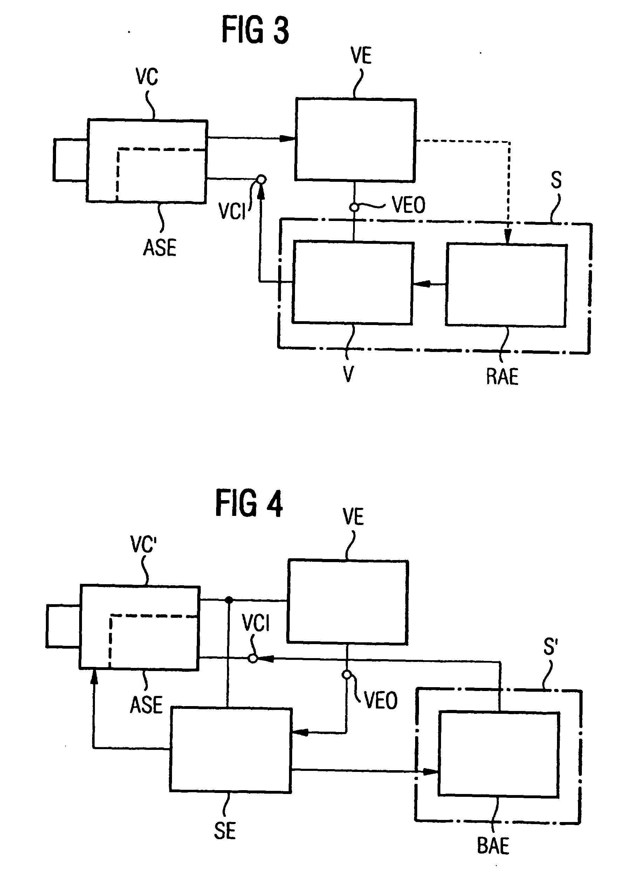

Fig. 3 zeigt in Form eines grob schematischen Funktions-Blockschaltbildes den Aufbau einer Anordnung zur Ausführung des oben unter Bezugnahme auf Fig. 1 erläuterten Verfahrens.

Eine Videokamera VC gibt die Bildsignale an einen Video-Encoder VE aus, der über einen Datensignalausgang VEO mit einer Ansteuereinrichtung S verbunden ist, welche ihrerseits über einen Steuersignaleingang VCI der Videokamera VC mit einer in dieser vorgesehenen Aufnahmesteuereinrichtung ASE verbunden ist. Die Ansteuereinrichtung S umfaßt eine Rahmenauswahleinrichtung RAE zur Festlegung eines Bildteiles bzw. Rahmens zur Unterscheidung globaler von lokalen Bewegungen, die eingangsseitig mit einem (nicht gesondert bezeichneten) Steuersignalausgang des Video-Encoders verbunden ist.

Weiter umfaßt die Ansteuereinrichtung eine eingangsseitig mit dem Datensignalausgang VEO des Video-Encoders VE sowie einem Ausgang der Rahmenauswahleinrichtung RAE verbundene Vergleichereinheit zum Vergleich der im Video-Encoder für die einzelnen Bild-Teilbereiche des Bildfeldes der Videokamera VC ermittelten Bewegungsvektoren innerhalb des Rahmens R (Fig. 1) miteinander bzw. mit einem vorbestimmten Schwellwert. Der Ausgang der Vergleichereinheit V ist zur Zuführung eines im Ergebnis des Vergleichsprozesses erhaltenen Steuersignals zur Aktivierung bzw. Deaktivierung der Aufnahmesteuereinrichtung ASE mit dem Steuersignaleingang VCI der Videokamera VC verbunden.

In ganz ähnlicher Weise ist eine modifizierte Anordnung aufgebaut, bei der anstelle von lokalen Bewegungsvektoren die im Video-Encoder angefallene Datenmenge bei der Bildkodierung für die einzelnen Bild-Teilbereiche ausgewertet wird. Im Grunde unterscheidet sich hierbei dann lediglich die Funktion der Vergleichereinrichtung V von der oben in Bezug auf Fig. 3 beschriebenen Funktion.

Bei der in Fig. 4 gezeigten Ausführung ist eine modifizierte Videokamera VC' vorgesehen, die über einen (nicht gesondert bezeichneten) Steuersignaleingang für Steuersignale einer Bildstabilisierungseinrichtung SE verfügt. Der Ausgang der Videokamera VC' ist neben dem Video-Encoder VE auch mit dieser Bildstabilisierungseinrichtung SE verbunden. Diese ist zudem eingangsseitig mit dem Datensignalausgang VEO des Video-Encoders VE verbunden. Ausgangsseitig ist sie auch mit einer Bewegungsbetrag-Auswertungseinrichtung BAE einer Ansteuereinrichtung S' verbunden, welche - analog wie bei Fig. 3 - mit einem Steuersignaleingang VCI einer Aufnahmesteuereinrichtung ASE der Videokamera VC' verbunden ist. Auch hier liefert die Ansteuereinrichtung S' ein die kamerainterne Aufnahmesteuereinrichtung ASE wahlweise aktivierendes oder deaktivierendes Steuersignal. Dieses wird hier jedoch im Ergebnis einer Auswertung der in der Bildstabilisierungseinrichtung SE ermittelten und vorliegenden Bewegungsbeträge innerhalb des Bildfeldes B der Videokamera VC' ermittelt. Einzelheiten dazu sind weiter oben ausgeführt.

Die Ausführung der Erfindung ist nicht auf die erwähnten Beispiele beschränkt, sondern ebenso in einer Vielzahl von Kombinationen und Abwandlungen möglich, die im Rahmen fachgemäßen Handelns liegen.

## Patentansprüche

1. Verfahren zum Betrieb einer Bildaufnahmeeinrichtung (VC; VC'), insbesondere Videokamera, in einer Bildübertragungsund/oder Bildspeicheranordnung, die eine der Bildaufnahmeeinrichtung nachgeschaltete Bilddatenkomprimierungseinrichtung (VE), insbesondere einen Video-Encoder, umfaßt,
**dadurch gekennzeichnet, daß**
in Abhängigkeit vom Ergebnis der Verarbeitung aufgenommener Bilder in der Bilddatenkomprimierungseinrichtung Steuermittel (ASE) der Bildaufnahmeeinrichtung zu mindestens einem vorbestimmten Regelvorgang für die Bildaufnahme, insbesondere für eine Helligkeitsregelung oder einen Weißabgleich, aktiviert oder deaktiviert werden, wobei die Verarbeitung aufgenommener Bilder eine Diskriminierung zwischen lokalen Bewegungen und globalen Bewegungen innerhalb einer Bildfolge umfasst.

2. Verfahren nach Anspruch 1,
**dadurch gekennzeichnet, daß**
in der Bilddatenkomprimierungseinrichtung (VE) Informationen über Bewegungen in der Szene verarbeitet werden, die insbesondere auch für eine Bilddatenkompression genutzt werden.

3. Verfahren nach Anspruch 1 oder 2,
**dadurch gekennzeichnet, daß**
die Steuermittel (ASE) bei Erkennung einer globalen Bewegung zu dem Regelvorgang aktiviert, bei Erkennung einer lokalen Bewegung sowie bei Nichtvorliegen einer Bewegung aber deaktiviert werden.

4. Verfahren nach Anspruch 3,
**dadurch gekennzeichnet, daß**
bei der Verarbeitung aufgenommener Bilder Bild-Teilbereiche (BE) vorbestimmt und für diese jeweils lokale Bewegungsvektoren berechnet werden und das Vorliegen einer globalen Bewegung dann beurteilt wird, wenn mindestens in einer vorbestimmten Mehrzahl von Bild-Teilbereichen die lokalen Bewegungsvektoren wesentlich von Null verschieden sind, insbesondere im wesentlichen übereinstimmen.

5. Verfahren nach Anspruch 4,
**dadurch gekennzeichnet**e daß
vor der Verarbeitung die Mehrzahl von Bild-Teilbereichen (BE) in Form eines das Bildzentrum mindestens teilweise umgreifenden Bildteiles (R) vorbestimmt wird.

6. Verfahren nach Anspruch 5,
**dadurch gekennzeichnet, daß**
der Bildteil (R) in Form eines "U" oder rechteckigen Rahmens oder mindestens einen Halbkreis umfassenden Kreisringabschnitts vorbestimmt wird.

7. Verfahren nach Anspruch 2 oder 3,
**dadurch gekennzeichnet, daß**
bei der Verarbeitung aufgenommener Bilder, insbesondere im Rahmen eines Verfahrens zur Bildstabilisierung, Bewegungsbeträge ermittelt und ausgewertet werden.

8. Verfahren nach einem der vorangehenden Ansprüche,
**dadurch gekennzeichnet, daß**
über die Aktivierung oder Deaktivierung der Steuermittel (ASE) der Bildaufnahmeeinrichtung (VC; VC') in Abhängigkeit von einer bei der Bilddatenkodierung entstehenden Datenmenge, insbesondere im Ergebnis einer Schwellwertdiskriminierung, entschieden wird.

9. Verfahren nach Anspruch 5 und Anspruch 8,
**dadurch gekennzeichnet, daß**
die bei der Bilddatenkodierung des vorbestimmten Bildteiles (R) entstehende Datenmenge erfaßt und über die Aktivierung oder Deaktivierung der Steuermittel (ASE) der Bildaufnahmeeinrichtung (VC; VC') in Abhängigkeit von dieser Datenmenge entschieden wird.

10. Anordnung zur Durchführung des Verfahrens nach einem der vorangehenden Ansprüche, mit
- einer Bildaufnahmeeinrichtung (VC; VC') mit einem Steuersignaleingang (VCI) für ein externes Ansteuersignal, welcher mit internen Steuermitteln (ASE) für die Bildaufnahme, insbesondere für eine Helligkeitsregelung oder einen Weißabgleich, verbunden ist,
- einer Bilddatenkomprimierungseinrichtung (VE) mit einem Datensignalausgang (VEO) und **gekennzeichnet durch**
- eine eingangsseitig mit dem Datensignalausgang(VEO) der Bilddatenkomprimierungseinrichtung (VE) und ausgangsseitig
mit dem Steuersignaleingang (VCI) der Bildaufnahmeeinrichtung (VC; VC') verbundene Ansteuereinrichtung (S; S') zur Verarbeitung von **durch** die Bilddatenkomprimierungseinrichtung gelieferten Bilddaten und zur Erzeugung des die internen Steuermittel (ASE) für die Bildaüfnahme wahlweise aktivierenden oder deaktivierenden Ansteuersignals hieraus, wobei die Verarbeitung eine Unterscheidung zwischen globalen und lokalen Bewegungen innerhalb einer Bildfolge umfasst.

11. Anordnung nach Anspruch 10,
**dadurch gekennzeichnet, daß**
die Ansteuereinrichtung (S) Auswahlmittel (RAE) zur Festlegung eines vorbestimmten Bildteiles (R) durch Auswahl einer Mehrzahl von in der Bilddatenkomprimierungseinrichtung vorbestimmten Bild-Teilbereichen (BE) aufweist.

12. Anordnung nach Anspruch 11,
**dadurch gekennzeichnet, daß**
die Ansteuereinrichtung (S) Vergleichermittel (V) zum Vergleich der einzelnen Bewegungsvektoren in verschiedenen Bild-Teilbereichen (BE) des vorbestimmten Bildteiles mit einem vorbestimmten Vergleichswert und/oder miteinander aufweist.

13. Anordnung nach Anspruch 10,
**dadurch gekennzeichnet, daß**
die Ansteuereinrichtung (S) Datenmengen-Auswertungsmittel zur Auswertung einer bei der Bilddatenkodierung anfallenden Datenmenge aufweist, die insbesondere Schwellwertdiskriminatormittel zum Vergleich mit mindestens einem vorbestimmten Schwellwert umfassen.

14. Anordnung nach Anspruch 11 und Anspruch 13,
**dadurch gekennzeichnet, daß**
die Datenmengen-Auswertungsmittel mit den Auswahlmitteln zusammenwirken derart, daß die Auswertung der Datenmenge für
den vorbestimmten Bildteil erfolgt.

15. Anordnung nach Anspruch 10,
**dadurch gekennzeichnet, daß**
die Ansteuereinrichtung (S') Bewegungsbetrag-Auswertungsmittel (BAE) zur Auswertung von Bewegungsbeträgen in den Bildern von aufgenommenen Bildfolgen aufweist.

16. Anordnung nach Anspruch 15,
**dadurch gekennzeichnet, daß**
die Ansteuereinrichtung (S) mit einem Datenausgang einer Bildstabilisierungseinrichtung (SE) verbunden ist.

17. Mobilfunk-Endgerät mit einer Anordnung nach einem der Ansprüche 10 bis 16.

## Claims

1. Method of operating an image recording device (VC; VC'), particularly a video camera, in an image transmission arrangement and/or image storage arrangement, which arrangement comprises an image data compression means (VE), particular a video encoder, being arranged downstream the image recording device,
**characterized in that**
in dependence of a result of processing recorded images, in the image data compression means control means (ASE) of the image recording device for at least one predetermined control process for the image recording, particularly for a brightness control or a white balance, are activated or de-activated, wherein the processing of recorded images comprises a discrimination between local movements and global movements within an image sequence.

2. Method of claim 1, **characterized in that**, in the image data compression means (VE), information on movements in the scene are processed, which information is particularly used also for an image data compression.

3. Method of claim 1 or 2, **characterized in that** the control means (ASE) are activated for the control process upon detection of a global movement, but are de-activated upon detection of a local movement as well as upon no presence of a movement.

4. Method of claim 3, **characterized in that**, in the processing of recorded images, image sub-portions (BE) are predetermined and that for each of the image sub-portions local movement vectors are calculated and that the presence of a global movement is judged if in at least a predetermined plurality of image sub-portions the local movement vectors substantially differ from zero, in particular essentially correspond with each other.

5. Method of claim 4, **characterized in that**, prior to the processing, the plurality of image sub-portions (BE) is predetermined in form of an image part (R) at least partially encompassing the image center.

6. Method of claim 5, **characterized in that** the image part (R) is predetermined in form of a "U" or a rectangular frame or a circular ring segment at least comprising a semi-circle.

7. Method of claim 2 or 3, **characterized in that**, in the processing of recorded images, particularly in the framework of a method for image stabilization, movement amounts are determined and analyzed.

8. Method according to one of the preceding claims, **characterized in that** a decision is made on the activation or de-activation of the control means (ASE) of the image recording means (VC, VC') is made in dependence of a data set resulting from an image data encoding, in particular as a result of a threshold discrimination.

9. Method of claim 5 and claim 8, **characterized in that** the data set resulting from the image data encoding of the predetermined image part (R) is detected and a decision on the activation or de-activation of the control means (ASE) of the image recording means (VC; VC') is made in dependence of that data set.

10. Arrangement for carrying out the method of one of the preceding claims, comprising:
- an image recording means (VC; VC') having a control signal input (VCI) for an external control signal, which control signal input is connected to internal control means (ASE) for the recording of images, particularly for a brightness control or a white balance;
- an image data compression means (VE) having a data signal output (VEO) and **characterized by**
- a control means (S, S') being connected, on its input side, to the data signal output (VEO) of the image data compression means (VE) and, on its output side, to the control signal input (VCI) of the image recording means (VC; VC'), the control means for processing of image data provided by the image data compression means and for generating therefrom the control signal that selectively activates or de-activates the internal control means (ASE) for the recording of images, wherein the processing comprises a discrimination between global and local movements within a sequence of images.

11. Arrangement according to claim 10, **characterized in that** the control means (S) includes selection means (RAE) for determining a predetermined image part (R) by selection of a plurality of image sub-portions (BE) predetermined in the image data compression means.

12. Arrangement according to claim 11, **characterized in that** the control means (S) comprises comparator means (V) for comparison of the individual movement vectors in different image sub-portions (BE) of the predetermined image part with a predetermined comparative value and/or with each other.

13. Arrangement according to claim 10, **characterized in that** the control means (S) comprises data set analyzing means for analyzing a data set resulting from the image data encoding, which data set analyzing means particularly including threshold discrimination means for comparison with at least one predetermined threshold.

14. Arrangement according to claim 11 and claim 13, **characterized in that** the data set analyzing means cooperates with the selection means such that the analysis of the data set takes place for the predetermined image part.

15. Arrangement according to claim 10, **characterized in that** the driving means comprises movement amount analyzing means (BAE) for analysis of movement amounts in the images of recorded image sequences.

16. Arrangement according to claim 15, **characterized in that** the driving means (S) is connected to a data output of an image stabilization means (SE).

17. Mobile communications terminal comprising an arrangement of one of the claims 10 to 16.

## Revendications

1. Procédé de commande d'un dispositif d'enregistrement d'images (VC ; VC'), en particulier d'une caméra vidéo, dans un système de transmissionet/oudemémorisation d'images comprenant un dispositif (VE) de compression des données d'image disposé à la suite du dispositif d'enregistrement d'images,
**caractérisé en ce qu'**en fonction du résultat du traitement des images enregistrées dans le dispositif de compression des données d'image, des moyens de commande (ASE) du dispositif d'enregistrement d'images sont activés ou désactivés pour au moins une opération de réglage prédéfinie pour l'enregistrement des images, notamment pour un réglage de luminosité ou une balance de blanc, le traitement des images enregistrées incluant une discrimination entre déplacements locaux et déplacements globaux à l'intérieur d'une séquence d'images.

2. Procédé selon la revendication 1, **caractérisé en ce que** des informations sur les déplacements sur la scène sont traitées dans le dispositif de compression des données d'image (VE), lesdites informations étant en particulier également exploitées pour une compression des données d'image.

3. Procédé selon la revendication 1 ou la revendication 2, **caractérisé en ce que** les moyens de commande (ASE) sont activés pour l'opération de réglage en cas de détection d'un déplacement global, mais sont désactivés en cas de détection d'un déplacement local ainsi qu'en cas d'absence de déplacement.

4. Procédé selon la revendication 3, **caractérisé en ce que** lors du traitement des images enregistrées, des zones d'image partielles (BE) sont prédéfinies et des vecteurs de déplacements locaux calculés pour chacune de celles-ci, et **en ce qu'**un déplacement global est estimé présenté si les vecteurs de déplacements locaux diffèrent sensiblement de zéro, et sont en particulier sensiblement concordants dans au moins une pluralité prédéfinie de zones d'image partielles.

5. Procédé selon la revendication 4, **caractérisé en ce que** la pluralité prédéfinie de zones d'image partielles (BE) est prédéfinie avant le traitement sous la forme d'une partie d'image (R) entourant au moins partiellement le centre de l'image.

6. Procédé selon la revendication 5, **caractérisé en ce que** la partie d'image (R) est prédéfinie sous la forme d'un « U » ou d'un cadre rectangulaire, ou d'un segment de cercle incluant au moins un demi-cercle.

7. Procédé selon la revendication 2 ou la revendication 3, **caractérisé en ce que** des valeurs de déplacement sont déterminées et évaluées lors du traitement des images enregistrées, notamment dans le cadre d'un procédé pour la stabilisation d'image.

8. Procédé selon l'une des revendications précédentes, **caractérisé en ce que** l'activation ou la désactivation des moyens de commande (ASE) du dispositif d'enregistrement d'images (VC ; VC') est décidée en fonction d'une quantité de données formée lors du codage des données d'image, notamment à la suite d'une discrimination de valeur seuil.

9. Procédé selon la revendication 5 et la revendication 8, **caractérisé en ce que** la quantité de données formée lors du codage des données d'image de la partie d'image (R) prédéfinie est saisie, et **en ce que** l'activation ou la dés-activation des moyens de commande (ASE) du dispositif d'enregistrement d'images (VC ; VC') est décidée en fonction de cette quantité de données.

10. Système pour l'exécution du procédé selon l'une des revendications précédentes, avec
- un dispositif d'enregistrement d'images (VC ; VC') avec une entrée de signal de commande (VCI) pour un signal de commande externe, reliée à des moyens de commande internes (ASE) pour l'enregistrement d'images, notamment pour un réglage de luminosité ou une balance de blanc,
- un dispositif de compression des données d'image (VE) avec une sortie de signal de données (VEO), et
**caractérisé par**
- un dispositif de commande (S ; S') relié à la sortie de signal de données (VEO) du dispositif de compression des données d'image (VE) côté entrée et à l'entrée de signal de commande (VCI) du dispositif d'enregistrement d'images (VC ; VC') côté sortie pour le traitement des données d'image délivrées par le dispositif de compression des données d'image et pour la génération du signal de commande activant ou désactivant optionnellement le dispositif de commande internes (ASE) pour l'enregistrement d'images, ledit traitement incluant une distinction entre déplacements globaux et déplacements locaux à l'intérieur d'une séquence d'images.

11. Système selon la revendication 10, **caractérisé en ce que** le dispositif de commande (S) comporte des moyens de sélection (RAE) pour la fixation d'une partie d'image (R) prédéfinie par sélection d'une pluralité de zones d'image partielles (BE) prédéfinies dans le dispositif de compression des données d'image.

12. Système selon la revendication 11, **caractérisé en ce que** le dispositif de commande (S) comporte des moyens comparateurs (V) pour la comparaison des différents vecteurs de déplacement dans différentes zones d'image partielles (BE) de la partie d'image (R) prédéfinie avec une valeur de comparaison prédéfinie et/ou entre eux.

13. Système selon la revendication 10, **caractérisé en ce que** le dispositif de commande (S) comporte des moyens d'évaluation des quantités de données pour l'évaluation d'une quantité de données formée lors du codage des données d'image, lesquels comprennent notamment des moyens discriminateurs de valeur seuil pour la comparaison avec au moins une valeur seuil prédéfinie.

14. Système selon la revendication 11 et la revendication 13, **caractérisé en ce que** les moyens d'évaluation des quantités de données coopèrent avec les moyens de sélection de telle manière que l'évaluation de la quantité de données est effectuée pour la partie d'image prédéfinie.

15. Système selon la revendication 10, **caractérisé en ce que** le dispositif de commande (S') comporte des moyens d'évaluation de valeur de déplacement (BAE) pour l'évaluation de valeurs de déplacement dans les images de séquences d'images enregistrées.

16. Système selon la revendication 15, **caractérisé en ce que** le dispositif de commande (S) est relié à une sortie de données d'un dispositif de stabilisation d'image (SE).

17. Station mobile munie d'un système selon l'une des revendications 10 à 16.
